# EUROPEAN PATENT APPLICATION

(11) **EP 4 272 880 A1**
(43) Date of publication of application: **08.11.2023**
(21) Application number: 22171997.4
(22) Date of filing: 06.05.2022
(51) Int. Cl.: B08B 1/04, B08B 7/02, B08B 9/027, B22F 5/00, B22F 5/04, B22F 10/66, B22F 10/68, B33Y 40/20, C21D 1/30, C21D 10/00, C22F 3/00, F01D 5/00, B22F 10/28

(54) **STRESS RELIEVING FOR CONTINUOUS FLOW ENGINE COMPONENTS**

(71) Applicant: Siemens Energy Global GmbH & Co. KG, 81739 München (DE)
(72) Inventor: Avdovic, Pajazit, 60209 Norrköping (SE)

(57) **Abstract**

The present invention refers to an improved method of relieving a 3D printed continuous flow engine of stress. Furthermore, the present invention refers to a 3D printed continuous flow engine component relieved from stress by such method. Furthermore, the present invention refers to a computer program product causing a computing entity to execute such method. Furthermore, the present invention refers to a powder removal device to be utilized in such method.

## Description

The present invention refers to an improved method of relieving a 3D printed continuous flow engine of stress providing less strain, a simplified procedure and very time efficient solution to provide highly reliable continuous flow engine components. Additionally, the present invention refers to a 3D printed continuous flow engine component relieved from stress by such method. Furthermore, the present invention refers to a computer program product causing a computing entity to execute such method allowing to easily upgrade certain existing devices with minimal mechanical changes of the device. Furthermore, the present invention refers to a powder removal device to be utilized in such method.

Continuous flow engine components represent parts of continuous flow engines like gas turbines, steam turbines and compressors are well established. However, they are simultaneously subject to further development and improvements to tackle the burdens and requirements in this context. Simultaneously, there is a constant need to increase the availability of spare parts while decreasing the costs during such times of constantly increasing requirements. 3D printing was identified as very beneficial method to manufacture components even for highly stressed components like hot gas path components of gas turbines.

Yet, such the manufacturing method leaves less and less possibilities to optimize the manufacturing still providing the high requirements and provide the reliability required while reducing the manufacturing effort. Especially, the reliability to ensure a safe operation of such continuous flow engine needs to be kept in mind in this context. Some gas turbine failing not only risks the energy production and distribution of a complete energy grid. It also represents a huge risk for the security and even life of the people operating it. Herein, the field of continuous flow engines provides a highly specific area taking into account the above referenced demands and the high costs rendering new methods and tools provided for very specific applications being highly interesting despite required effort and costs associated hereto. Thus, there is a need to further optimize the manufacturing procedure of such components to provide a safe and reliable manufacturing as top priority while still reducing the associated effort.

These problems are solved by the methods and products as disclosed hereafter and in the claims. Further beneficial embodiments are disclosed in the dependent claims and the further description. These benefits can be used to adapt the corresponding solution to specific needs or to solve further problems.

According to one aspect the present invention refers to a method of stress relieving of an 3D printed continuous flow engine component,
wherein the 3D printed continuous flow engine component contains internal stresses,
wherein the method contains the steps of
   - retrieving a continuous flow engine component,
   - vibrating the continuous flow engine component at a predetermined frequency to remove the internal stresses from the 3D printed continuous flow engine component.

Such method allows to significantly reduce the stress in such 3D printed continuous flow engine component to provide the required reliability with regard to mechanical stability even under extremely demanding conditions like in the hot gas path of gas turbines. Simultaneously, the effort and time required to improve the properties is significantly reduced based on the swift process and very well possibilities to include such steps into the manufacturing process. It was surprisingly noted that the inventive method allows to partially completely refrain from time consuming processes providing different challenges like heating the component to a specified temperature to relieve it from such stress. Simultaneously, the inventive method provides many benefits like a significant reduction of the treatment time. Even some short treatment of half an hour is able to provide some significant effect and stress relief. While a comparable stress relief by heating requires not only hours, but days to weeks including the controlled heating up and cooling down processes. Even the combination of the inventive method utilizing vibrations with some heating allows to significantly decrease the required heating to provide a sufficient stress relief and reduce the treatment time. Overall, it was noted that the inventive method does not necessarily requires to aim at a complete removal of the stress of such component. It was noted that the easily achieved partial stress removal of the inventive method increases the properties enough to ensure fulfilling the requirements of later usage. While it seems difficult to make such judgement it was noted that the skilled person can make use of existing component data collected over decades to associate certain stress to corresponding properties of the 3D printed continuous flow engine component. Utilizing such historic data and, for example, routine test routines allows to provide conditions of such vibration treatment allowing to reliably remove the strain of such components.

According to a further aspect the present invention refers to a 3D printed continuous flow engine component stress relieved according to an inventive method. Surprisingly, it was noted that such component can be differentiated from the components that had their stress relieved by different means. For example, but cutting the component apart and etching the metal surface the stress still included in the component provide patterns that can be utilized to identify such stress relief method. Surprisingly, it was noted that in some cases component treated according to the inventive method even provide improved properties compared to components that have been treated, for example, by heat treatment. For example, for gas turbine and steam turbine components utilized in the hot gas path. Also, the stress within the component can be determined by slicing through the component, polishing it and, for example, utilizing electron channeling contrast imaging and electron backscatter diffraction mapping utilizing, for example, a Hitachi SU-70 FEG-SEM. The person skilled in the art is well aware on how to determine the remaining stress in a component utilizing such means.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a powder removal device being adapted to remove powder material from a 3D printed continuous flow engine, wherein the powder removal device is adapted to apply vibrations according to an inventive method to the 3D printed continuous flow engine. Providing such specifically adapted powder removal device proved to be highly beneficial despite the significant additional costs in this context. For example, it is surprisingly not only possible to integrate this treatment during the powder removal to save processing time. Even including some generic stress removal step during such powder removal in general was noted to be beneficial to at least reduce the stress contained in the component. Allowing to at least reduce later required treatment steps or even complete remove the need to include later treatment steps. Based on the utilization of past experiences it is also possible to include some generic treatment for specific components or types of components always to be applied in such case.

To simplify understanding of the present invention it is referred to the detailed description hereafter and the figures attached as well as their description. Herein, the figures are to be understood being not limiting the scope of the present invention but disclosing preferred embodiments explaining the invention further.

Fig. 1 shows a scheme of the inventive method.

Fig. 2 shows a schematic drawing of a depowdering and stress relieving device.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long term data storage like hard drives or data storage units like CDs, DVDs, USB sticks and the like. Such data storage can additionally include or be connected to a processing unit to allow a processing of the data stored on the data storage.

The term "continuous flow engine" as used herein refers to a device utilizing a continuous stream of a fluid like a gas or a liquid. Herein, such continuous flow engine typically provide a rotor located in the fluid and interacting with said fluid. Herein, such fluid can either be utilized to provide a rotational movement of the rotor being able to be transformed into, for example, electrical energy. Examples of such continuous flow engines are gas turbines and steam turbines. Alternatively, the rotor can actively be rotated allowing to, for example, compress the fluid. An example of such application is a compressor as utilized, for example, in oil refineries.

According to one aspect the present invention refers to a method as specified above. The required frequencies can be identified by the skilled person by simple experiments like utilizing damaged components or test structures like metal rings. For example, some X22CrMoV12-1 steel ring with the nominal chemical composition being 0.22% C, 0.3% Si, 0.65% Mn, 11.5% Cr, 1.0% Mo, 0.6% Ni, 0.3% V and rest Fe can be efficiently freed from stress by vibrating it at 85 Hz. It was noted that it is typically beneficial to identify a number of frequencies by utilizing different test units and provide a stress relief program switching between different frequencies to address different types of stresses from such component without requiring to specifically identify the very specific stress available. For example, during such process the frequency can be beneficially varied between at least 3%, more preferred at least 7%, even more preferred at most 15%, of the upper limit of the frequency band utilized. Thus, in case the upper limit of the frequency bandwidth utilized is 100Hz the band width of the frequencies utilized is at least from 97Hz to 100Hz, more preferred at least from 93Hz to 100Hz, even more preferred at least from 85Hz to 100Hz.

However, simply going through all frequencies is highly unproductive. Identifying the most relevant frequencies and concentrating on them provides a very good result for typical applications while saving very much time. According to further embodiments it is preferred that the frequency can be varied between at most 50%, more preferred at most 30%, even more preferred at most 20%, of the upper limit of the frequency band utilized.

It was further noted that the inventive method can be beneficially combined with a powder removal step. According to further embodiments it is preferred that the continuous flow engine component contains cavities,
wherein the cavities are at least partially filled with powder material,
wherein the method contains the step of utilizing a vibrational device to remove the powder material from the continuous flow engine component,
wherein the vibration of the vibrational device is selected to be at least partially. Manufacturing a continuous flow engine components providing cavities using 3D printing like selective laser melting results in the component being at least partially filled with the powder material utilized in such selective laser melting. Such powder material can be removed by different means available to the skilled person like utilizing vacuum, high pressure, vibrations or the like or combinations thereof. The provision of a specialized device additionally including such powder removal possibility provides a significant additional effort like described above.

According to further embodiments it is preferred that the method contains the step of identifying the stress in the continuous flow engine component. For example, such identification can be realized by retrieving stress data from a stress database. Furthermore, it can be determined for the specific component based on measurements like x-ray measurements, thermal behavior when heating up the component at least locally, and the like to identify corresponding stresses. However, it is especially beneficially to at least additionally utilize such database, as it allows to introduce data originating from destructive measurements of comparable continuous flow engine components and transfer it to the component in question.

Furthermore, it was noted that for typical applications the utilization of collected stress data is possible and beneficial. According to further embodiments it is preferred that the method utilizes a stress database,
wherein the stress database contains component specific patterns associated to stresses in continuous flow engine components,
wherein the method contains the step of identifying the stress in the continuous flow engine component by measuring a component specific pattern like introducing a vibration, for example, by hitting the component and measuring the specific response of the continuous flow engine component,
retrieving stress data of comparable continuous flow engine components based on the associated patterns,
wherein the method contains the step of providing a vibration scheme for the 3D printed continuous flow engine component based on the stress data. Utilizing such component specific patterns and stored data allows to determine the current state of the continuous flow engine component as well as the stress relief process with a high reliability and low effort.

According to further embodiments it is preferred that the method utilizes a stress database,
wherein the stress database contains component specific patterns associated to continuous flow engine components providing no relevant stress,
the method contains the step of identifying the stress in the continuous flow engine component by measuring a component specific pattern like introducing a vibration, for example, by hitting the component and measuring the specific response of the continuous flow engine component,
wherein the 3D printed continuous flow engine component is subjected to another vibration treatment in case the measured specific pattern is deviating from the specific patterns associated to continuous flow engine components providing no relevant stress retrieved form the stress database more than a predefined deviation limit.

According to further embodiments it is preferred that the method utilizes manufacturing database and a stress database, wherein the stress database contains stress data associated to manufacturing data of continuous flow engine components, wherein the manufacturing database contains manufacturing data of the continuous flow engine component,
wherein the method contains the step of utilizing the manufacturing data of the continuous flow engine component to retrieve stress data of comparable continuous flow engine components based on manufacturing data of the comparable continuous flow engine components,
wherein the stress data is utilized to provide a vibration scheme to remove the stress from the 3D printed continuous flow engine component.

Furthermore, it was noted that specific manufacturing data can be beneficially utilized for the inventive method. According to further embodiments it is preferred that the method utilizes manufacturing database, wherein the manufacturing database contains data with regard to the manufacturing of 3D printed layers of the continuous flow engine component, wherein the method contains the step of determining the internal stresses of the 3D printed continuous flow engine component taking into account the data with regard to the manufacturing of 3D printed layers of the continuous flow engine component. It was noted that even minor deviations and irregularities during the layerwise printing of the 3D printed continuous flow engine component can be beneficially utilized. For example, it is possible to provide a general assessment of the internal stresses surprisingly easily to be expected and to understand deviations from historic stress data from comparable components.

It is possible to attach the continuous flow engine component by any means to a device executing the inventive method to reduce the stress in the component. According to further embodiments it is preferred that the 3D printed continuous flow engine component is attached on top of a part of a device introducing vibrations into 3D printed continuous flow engine component to stress relieve the 3D printed continuous flow engine component. It was noted that such arrangement is not only very simple, but also significantly reduces the chance of damages during placement and retrieval of the component. Especially, for 3D printed continuous gas turbine components such adaption of the method is typically beneficial. For example, it was noted that, for example, vanes and blades are not only highly expensive, but also sensitive components requiring a safe and secure handling.

According to further embodiments it is preferred that the 3D printed continuous flow engine component is attached to a vibration arm being able to be at least rotated,
wherein the vibration arm is adapted to apply the vibration to the 3D printed continuous flow engine component while the powder material is removed from the 3D printed continuous flow engine component. The aforementioned placement on top of a part of a device introducing vibrations into 3D printed continuous flow engine component is a very simply and reliable approach. However, it was noted that utilizing such vibration arm provides additional benefits like a significantly improved post processing speed. Providing specifically adapted vibration arms like correspondingly adapted robot arms, for example, allows to provide a secure and reliable handling while being able to simultaneously remove powder material from the manufacturing process.

According to a further aspect the present invention refers to a 3D printed continuous flow engine component stress relieved according to an inventive method.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a powder removal device being adapted to remove powder material from a 3D printed continuous flow engine,
wherein the powder removal device is adapted to apply vibrations according to an inventive method to the 3D printed continuous flow engine.

According to further embodiments it is preferred that the powder removal device contains a stimulator,
wherein the stimulator is adapted to introduce energy into the 3D printed continuous flow engine component,
wherein the powder removal device is adapted to measure a response originating from the energy introduced into the 3D printed continuous flow engine component,
wherein the measured response is adapted to be analyzed to create the measured pattern of the 3D printed continuous flow engine component. Typically, it is preferred that the powder removal device is adapted to create the measured pattern. For example, such simulator introducing kinetic energy by hitting the component with a tool and measures the vibrations to measure a specific pattern allowing to identify the stress in the 3D printed continuous flow engine component. Other methods that might be the introduction of thermal energy coupled with a high-resolution thermal scan or the like. Corresponding methods can also be combined and applied according to the specific component and/or the specific location of a component based on the specific demands and expected stress to be determined.

The following detailed description of the figure uses the figure to discuss illustrative embodiments, which are not to be construed as restrictive, along with the features and further advantages thereof.

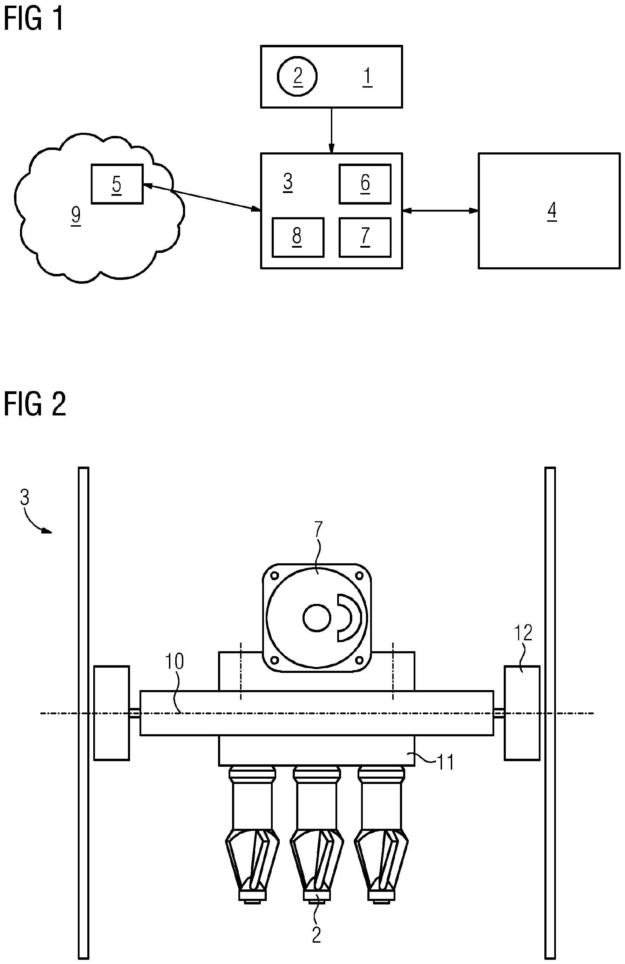

Figure 1 shows a scheme including a system to realize the inventive method. Herein, the 3D printed continuous flow engine component 2 is manufactured in a 3D printing device 1. The component 1 is retrieved from the 3D printing device for further processing.

The component 2 is transferred to the powder removal device 3 additionally providing the vibration means to realize the inventive method. Herein, the component 2 is attached to a robot arm 6 providing means to reliably fasten the component 2. Additionally, the robot arm 6 is adapted to introduce the vibrations according to the inventive method to reduce or remove the stress inside the component 2. Simultaneously, the powder contained in the cavities of the component 2 can be removed. Herein, the component and the robot arm 6 are contained in a sealed chamber preventing the powder to be distributed in the facility. This is especially important for applications like gas turbine components 2 and steam turbine component 2, as they are typically manufactured from an alloy being dangerous when inhaled. Resulting in a significant benefit to encapsulate such processing area despite the related effort required.

Furthermore, the depowdering and stress relieving device 3 contains an energy introduction apparatus 7 being adapted to introduce energy as vibrations into the component 2. The energy introduction apparatus 7 introduces mechanical energy by means of hitting the component 2 to introduce a vibration. Said vibration of the component 2 is measured by the measuring apparatus 8 to record a component specific pattern indicating the stress being available in the component 2.

The depowdering and stress relieving device 3 is adapted to measure the component specific pattern and evaluate the stress based on stress data retrieved from a local stress database 4. Said stress database 4 contains stress data collected over time as well as simulated data allowing to assign a corresponding state of the component 2 to a specific pattern being measured. It was noted that based on the specific location of the energy introduced by the energy introduction apparatus 7 and the measurement of the measuring apparatus 8, for example, vibrations of specific wave lengths indicate a specific stress in the component 2. It was noted that no complete removal of all stress in the component 2 is typically required. Reducing the stress below a certain level and achieving a known specific pattern is typically sufficient to ensure a safe a reliable subsequent utilization of the component 2. Herein, the steps of vibrating the component and measuring the specific pattern of the component 2 are repeated until a satisfactory result is achieved. Based on the specific pattern and past experiences as noted in the stress database 4 the vibration treatment is eventually adapted to improve its effect and remove a specific type of stress as identified.

In this context, the depowdering and stress relieving device 3 additionally utilizes manufacturing data from a manufacturing database 5 located in a cloud 9 to avoid misinterpretations of the specific pattern based on, for example, small cavities or a specific grain structure originating from minor deviations during manufacturing. It was noted that based on the retrieved data from the manufacturing database the specific pattern as measured by the measuring device 8 can be interpreted far more securely considering the stress data retrieved from the stress database 4. Especially, as it was noted that deviating from test results the real experience and data collected during routine work and real-life application results in a significant benefit to include such data in the evaluation.

Figure 2 shows a schematic drawing of a depowdering and stress relieving device. Herein the 3D printed continuous flow engine components 2 are attached to a plate 11 of the depowdering and stress relieving device 3. The plate 11 can be rotated around a rotational axis 11 by means of the rotating axle 12 allowing to improve the depowdering by adapting the orientation of the 3D printed continuous flow engine component 2 according to the specific design, depowdering stage and the like. On the opposing side an energy introduction apparatus 7 is placed introducing vibrations into the plate 11 transmitting the vibrations to the 3D printed continuous flow engine component 2.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of stress relieving of an 3D printed continuous flow engine component,
wherein the 3D printed continuous flow engine component contains internal stresses,
wherein the method contains the steps of
- retrieving a continuous flow engine component,
- vibrating the continuous flow engine component at a predetermined frequency to remove the internal stresses from the 3D printed continuous flow engine component.

2. Method according to claim 1, wherein the continuous flow engine component contains cavities,
wherein the cavities are at least partially filled with powder material,
wherein the method contains the step of utilizing a vibrational device to remove the powder material from the continuous flow engine component,
wherein the vibration of the vibrational device is selected to be at least partially.

3. Method according to any of claims 1 to 2,
wherein the method contains the step of identifying the stress in the continuous flow engine component.

4. Method according to claim 3,
wherein the method utilizes a stress database,
wherein the stress database contains component specific patterns associated to stresses in continuous flow engine components,
wherein the method contains the step of identifying the stress in the continuous flow engine component by measuring a component specific pattern,
retrieving stress data of comparable continuous flow engine components based on the associated patterns,
wherein the method contains the step of providing a vibration scheme for the 3D printed continuous flow engine component based on the stress data.

5. Method according to any of claims 3 to 4,
wherein the method utilizes a stress database,
wherein the stress database contains component specific patterns associated to continuous flow engine components providing no relevant stress,
the method contains the step of identifying the stress in the continuous flow engine component by measuring a component specific pattern like introducing a vibration, for example, by hitting the component and measuring the specific response of the continuous flow engine component,
wherein the 3D printed continuous flow engine component is subjected to another vibration treatment in case the measured specific pattern is deviating from the specific patterns associated to continuous flow engine components providing no relevant stress retrieved form the stress database more than a predefined deviation limit.

6. Method according to any of claims 1 to 5,
wherein the method utilizes manufacturing database and a stress database,
wherein the stress database contains stress data associated to manufacturing data of continuous flow engine components, wherein the manufacturing database contains manufacturing data of the continuous flow engine component,
wherein the method contains the step of utilizing the manufacturing data of the continuous flow engine component to retrieve stress data of comparable continuous flow engine components based on manufacturing data of the comparable continuous flow engine components,
wherein the stress data is utilized to provide a vibration scheme to remove the stress from the 3D printed continuous flow engine component.

7. Method according to any of claims 1 to 6,
wherein the method utilizes manufacturing database,
wherein the manufacturing database contains data with regard to the manufacturing of 3D printed layers of the continuous flow engine component,
wherein the method contains the step of determining the internal stresses of the 3D printed continuous flow engine component taking into account the data with regard to the manufacturing of 3D printed layers of the continuous flow engine component.

8. Method according to any of claims 1 to 7,
wherein the 3D printed continuous flow engine component is attached to a vibration arm being able to be at least rotated,
wherein the vibration arm is adapted to apply the vibration to the 3D printed continuous flow engine component while the powder material is removed from the 3D printed continuous flow engine component.

9. 3D printed continuous flow engine component stress relieved according to a method of any of claims 1 to 8.

10. Computer program product, tangibly embodied in a machine-readable storage medium, including instructions operable to cause a computing entity to execute a method according to any of claims 1 to 8.

11. Storage device for providing a computer program product according to claim 10, wherein the device stores the computer program product and/or provides the computer program product for further use.

12. Powder removal device being adapted to remove powder material from a 3D printed continuous flow engine,
wherein the powder removal device is adapted to apply vibrations according to a method according to any of claims 1 to 8 to the 3D printed continuous flow engine.

13. Powder removal device according to claim 12,
wherein the powder removal device contains a stimulator, wherein the stimulator is adapted to introduce energy into the 3D printed continuous flow engine component,
wherein the powder removal device is adapted to measure a response originating from the energy introduced into the 3D printed continuous flow engine component,
wherein the measured response is adapted to be analyzed to create the measured pattern of the 3D printed continuous flow engine component.
